(19) Europäisches Patentamt
European Patent Office
Office européen des brevets

(11) **EP 3 729 144 B1**

(12) **FASCICULE DE BREVET EUROPEEN**

(45) Date de publication et mention de la délivrance du brevet:
**04.09.2024 Bulletin 2024/36**

(21) Numéro de dépôt: **18816142.6**

(22) Date de dépôt: **18.12.2018**

(51) Classification Internationale des Brevets (IPC):
**G01V 1/38** *(2006.01)* **B63G 8/18** *(2006.01)*
**B63G 8/42** *(2006.01)* **B63B 21/66** *(2006.01)*

(52) Classification Coopérative des Brevets (CPC):
**B63G 8/18; B63B 21/66; B63G 8/42; G01V 1/3826**

(86) Numéro de dépôt international:
**PCT/EP2018/085585**

(87) Numéro de publication internationale:
**WO 2019/121743 (27.06.2019 Gazette 2019/26)**

(54) **POISSON À PORTANCE HYDRODYNAMIQUE VARIABLE DE FAÇON RÉVERSIBLE ET LIGNE DE REMORQUAGE COMPRENANT LE POISSON**

SCHLEPPSENSOR MIT VARIABLEM HYDRODYNAMISCHEM AUFTRIEB UND SCHLEPPTAU MIT DEM SCHLEPPSENSOR

TOWFISH WITH REVERSIBLY VARIABLE HYDRODYNAMIC LIFT AND TOWING LINE COMPRISING THE TOWFISH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017 FR 1701323**

(43) Date de publication de la demande:
**28.10.2020 Bulletin 2020/44**

(73) Titulaire: **THALES**
**92190 Meudon (FR)**

(72) Inventeurs:
• **CADALEN, François**
**29200 BREST (FR)**
• **WARNAN, François**
**29200 BREST (FR)**
• **JEZEQUEL, Olivier**
**29200 BREST (FR)**
• **LONGUET, Jean-Philippe**
**29200 BREST (FR)**
• **VICARIOT, Philippe**
**29200 BREST (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**GB-A- 2 244 249     GB-A- 2 309 952**
**US-A- 3 613 626     US-A1- 2008 196 651**

**Description**

L'invention concerne les corps remorqués derrière un navire. Ces objets sont communément appelés poissons. Ils sont notamment utilisés dans le domaine des sonars à immersion variable. Le poisson est alors muni d'antennes d'émission ou de réception acoustique.

Pour réaliser correctement sa mission, le poisson est doté de caractéristiques hydrodynamiques adéquates. Entre autres, le poisson est configuré pour développer des forces verticales importantes qui lui permettent de plonger à une profondeur souhaitée malgré la vitesse de remorquage qui tend à le faire remonter en surface.

Le moyen le plus simple pour développer ces forces verticales est d'augmenter le poids du poisson au-delà de la poussée d'Archimède. Le poids à l'avantage d'être constant quelle que soit la vitesse du navire qui tracte le poisson. Un autre moyen consiste à disposer sur le poisson un ensemble d'ailes hydrodynamiques dont la portance est dirigée vers le bas. Étant donnée la densité de l'eau, ces ailes sont assez trapues et se logent facilement sur un corps remorqué. La force de portance hydrodynamique vers le bas augmente avec le carré de la vitesse du poisson par rapport à l'eau. De ce fait, plus la vitesse est importante et plus le poisson se trouve maintenu en immersion.

Les documents GB 2 309 952 A, GB 2 244 249 A, US 2008/196651 A1, et US 3 613 626 A illustrent la gestion de la force de portance hydrodynamique en condition opérationnelle.

Les sonars remorqués sont principalement utilisés dans le domaine militaire. Il se peut que le navire qui opère avec son sonar immergé en profondeur ait à prendre soudainement la fuite, par exemple en cas de prise en chasse par une torpille. Dans ce cas, étant donné l'urgence, il n'est pas possible de remonter à bord le corps remorqué. La vitesse de fuite du navire doit pouvoir être supportée à la fois par le corps remorqué et par le câble de remorquage du poisson. En effet, le câble subit une trainée hydrodynamique qui augmente avec la vitesse.

Le câble doit être dimensionné pour supporter une tension maximale générée par le navire pour une vitesse de fuite donnée. D'autres éléments, tels que la machine de remorquage ainsi que ses attaches sur le pont du navire devront également être dimensionnés pour résister à cette tension maximale. Une vitesse de fuite élevée impose un surdimensionnement de tous les éléments intervenant dans l'opération de remorquage. Le surdimensionnement du câble conduit à augmenter ses dimensions et à accroitre encore sa trainée hydrodynamique et par conséquent l'effort de traction sur le câble.

Pendant la fuite du navire, pour limiter la tension du câble, une manoeuvre consiste à remonter à bord autant de câble que possible. Pour permettre une telle manoeuvre, le treuil de remorquage doit aussi être surdimensionné.

Lorsque le corps remorqué est immergé et que la manoeuvre du treuil n'est pas possible, deux solutions subsistent. La première consiste dans la limitation de la vitesse de fuite du navire et la seconde en cas extrême consiste à couper la ligne de remorquage afin d'en éviter la rupture intempestive. Ceci entraine bien sûr la perte du corps remorqué.

La demande de brevet WO 2016/135326 déposée au nom de la demanderesse décrit un poisson équipé d'une aile lui assurant une portance orientée vers le bas lui permettant de se maintenir en profondeur lorsqu'il est tracté. Le poisson est équipé d'un verrou permettant de libérer l'aile et de réduire la portance du poisson. Une fois le verrou libéré, le poisson remonte vers la surface et la traction du câble diminue ce qui permet au navire tractant le poisson d'augmenter sa vitesse. La commande du verrou est rudimentaire ce qui lui confère une grande simplicité et donc une bonne fiabilité. Une fois le verrou libéré, le poisson conserve sa portance réduite. Lorsque le poisson est tracté il n'est pas possible de réarmer le verrou pour rendre au poisson sa portance maximale orientée vers le bas. Ainsi, une fois que le verrou a été déclenché pour réduire la portance du poisson, l'immersion du poisson diminue ce qui ne permet plus au poisson de poursuivre sa mission pleinement à la profondeur requise. Pour réarmer le verrou, il est nécessaire de remonter le poisson sur le pont du navire pour verrouiller l'aile en position de portance maximale. On peut seulement ensuite remettre le poisson à l'eau pour reprendre la mission.

L'invention vise à pallier tout ou partie des problèmes cités plus haut en proposant des moyens réversibles dans l'eau de réduction de la portance d'un poisson remorqué. Plus précisément, l'invention propose de piloter la portance du poisson au moyen de l'angle du câble tracteur par rapport au poisson.

A cet effet, l'invention a pour objet un poisson destiné à être immergé et remorqué par un câble, le poisson comprenant un bâti configuré pour se déplacer dans l'eau selon une direction principale horizontale et au moins un appendice configuré pour générer pour le poisson une portance hydrodynamique dirigée vers le bas lorsque le poisson se déplace dans l'eau sous l'effet du remorquage, l'appendice étant orientable afin de modifier sa portance. Selon l'invention, le poisson comprend une crosse mobile en rotation par rapport au bâti autour d'un axe horizontal perpendiculaire à la direction principale horizontale, le câble étant destiné à être fixé à la crosse. Le poisson comprend un mécanisme non motorisé configuré de sorte qu'une orientation de l'appendice, lui permettant de modifier la portance, est fonction d'un angle formé entre la crosse et le bâti défini à partir de la direction principale horizontale. Une loi reliant l'angle à l'orientation de l'appendice est configurée pour que lorsque la valeur de l'angle décroit, l'orientation de l'appendice est augmentée de façon à réduire la portance hydrodynamique du poisson.

Avantageusement, sur une plage de valeur de l'angle, la loi est instable de sorte qu'une valeur donnée de l'orientation de l'appendice entraine une réduction de l'angle.

Selon l'invention, au-delà d'une première valeur d'angle donnée, l'orientation de l'appendice est fixe de façon à générer une portance dite opérationnelle du poisson et en en deçà de la première valeur d'angle donnée, l'orientation de appendice est augmentée lorsque la valeur de l'angle décroit de façon à réduire la portance par rapport à la portance opérationnelle.

Avantageusement, en deçà d'une deuxième valeur d'angle donnée inférieure à la première valeur d'angle donnée, l'orientation de l'appendice est fixe de façon à générer une portance dite de fuite inférieure à la portance opérationnelle.

En deçà de la deuxième valeur d'angle donnée, l'orientation de l'appendice peut être positive ou nulle.

On définit une troisième valeur d'angle intermédiaire entre la première et la deuxième valeur d'angle et entre la première et la troisième valeur d'angle une loi reliant l'angle à l'orientation de l'appendice (27) est avantageusement configurée pour maintenir l'angle à une valeur stable.

La plage de valeur de l'angle où la loi est instable est définie entre la troisième et la deuxième valeur d'angle. Sur cette plage, la loi est avantageusement configurée de façon à orienter l'appendice pour atteindre la portance de fuite.

Le poisson peut comprendre une aile portante formant l'appendice et un empennage stabilisateur configuré pour maintenir sensiblement constante une assiette du poisson lors de modifications de l'orientation de l'appendice.

L'appendice peut être mobile en rotation par rapport au bâti autour d'un second axe horizontal, la mobilité de l'appendice permettant de modifier la portance du poisson, et le second axe horizontal de rotation de l'appendice est disposé sensiblement au centre de rotation instantané du poisson lorsque celui-ci pivote du fait d'une modification de l'orientation de l'appendice.

Le poisson comprend avantageusement une came et un suiveur de came, l'un étant solidaire de l'appendice et l'autre de la crosse, et le suiveur de came s'appuie sur une forme de la came lors de la rotation de la crosse autour de l'axe horizontal.

Le poisson comprend avantageusement un premier verrou configuré pour maintenir l'appendice à une orientation fixe lorsque la valeur de l'angle est au-delà de la première valeur d'angle donnée.

Le poisson comprend avantageusement un second verrou configuré pour immobiliser la crosse par rapport au bâti lorsque la valeur de l'angle formé entre la crosse et le bâti est en deçà de la deuxième valeur d'angle donnée.

L'invention sera mieux comprise et d'autres avantages apparaîtront à la lecture de la description détaillée d'un mode de réalisation donné à titre d'exemple, description illustrée par le dessin joint dans lequel :

la figure 1 représente de façon schématique un navire tractant un sonar actif ;
la figure 2 représente un corps remorqué du sonar de la figure 1 ;
la figure 3 représente le navire de la figure 1 tractant le corps remorqué dans deux configurations hydrodynamiques du corps remorqué ;
les figures 4 et 5 représentent un exemple de loi de pilotage de l'angle d'orientation d'un appendice du poisson en fonction d'un angle d'une crosse du poisson sur laquelle est fixé le câble tracteur ;
la figure 6 représente un premier mode de réalisation du pilotage de l'orientation de l'appendice en fonction de l'angle de la crosse ;
les figures 7a, 7b et 7c représentent un second mode de réalisation du pilotage de l'orientation de l'appendice en fonction de l'angle de crosse ;
les figures 8a à 8f représentent différentes orientations de l'appendice en fonctions de l'angle de la crosse pour le second mode de réalisation.

Par souci de clarté, les mêmes éléments porteront les mêmes repères dans les différentes figures.

L'invention est décrite en rapport au remorquage d'un sonar par un bâtiment de surface. Il est bien entendu que l'invention peut être mise en oeuvre pour d'autres éléments remorqués et pour d'autres moyens de remorquage.

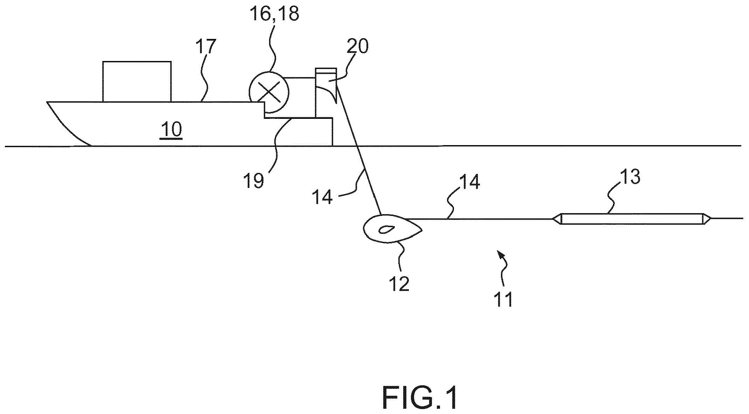

La figure 1 représente un navire 10 tractant un sonar actif 11 comprenant une antenne d'émission acoustique 12 communément appelée poisson et une antenne de réception acoustique 13 souvent appelée flûte. Le sonar 11 comprend également un câble 14 permettant de tracter les deux antennes 12 et 13. Le câble 14 assure également l'acheminement de signaux et d'alimentations entre le navire et les antennes 12 et 13 du sonar 11. Il est également possible de prévoir deux câbles distincts, l'un pour tracter le poisson 12 et l'autre pour la flûte 13, le câble tractant la flute étant alors fixé au poisson 12. L'invention concerne plus particulièrement le poisson 12 et peut être mise en oeuvre sans flûte 13.

Les antennes 12 et 13 sont mécaniquement arrimées et connectés électriquement et/ou optiquement au câble 14 de manière appropriée. De manière classique, l'antenne de réception 13 est formée d'une antenne linéaire de forme tubulaire identique à celles que l'on trouve dans les sonars passifs, d'où son nom de flûte, tandis que l'antenne d'émission 12 est intégrée dans une structure volumique ayant une forme s'apparentant à celle d'un poisson. La flûte de réception est généralement disposée à l'arrière, au niveau de l'extrémité du câble 14, le poisson étant positionné sur la partie du câble 14 la plus proche du navire 10. Durant une mission d'acoustique sous-marine, l'antenne 12 émet des ondes sonores dans l'eau et l'antenne de réception 13 capte d'éventuels échos provenant de cibles sur lesquelles se reflètent les ondes sonores issues de l'antenne 12.

La mise à l'eau et la sortie de l'eau des antennes 12 et 13 est réalisée au moyen d'un treuil 16 disposé sur un pont 17 du navire 10. Le treuil comprend un touret 18 dimensionné pour permettre l'enroulent du câble 14 ainsi que de l'antenne de réception 13. Le treuil 16 comprend également un châssis destiné à être fixé sur le pont du navire. Le touret 18 est apte à pivoter par rapport au châssis pour permettre l'enroulement du câble. L'enroulement du câble 14 permet de haler le poisson 12 à bord du navire 10, par exemple sur une plateforme arrière 19 prévue à cet effet.

Un chaumard 20 permet de guider le câble 14 en aval du touret 18. Le chaumard 20 constitue le dernier élément de guidage du câble 14 avant sa descente dans l'eau. Le câble 14 comprend par exemple une âme formée de conducteurs électriques et/ou optiques permettant de transmettre de l'énergie et des informations entre des équipements du sonar situés à bord du navire 10 et les antennes 12 et 13. L'âme du câble 14 est généralement recouverte d'un toron de fils métalliques assurant la tenue mécanique du câble 14 notamment à la traction. Le câble 14 peut être recouvert d'écailles configurées pour adapter son profil hydrodynamique afin de limiter sa trainée.

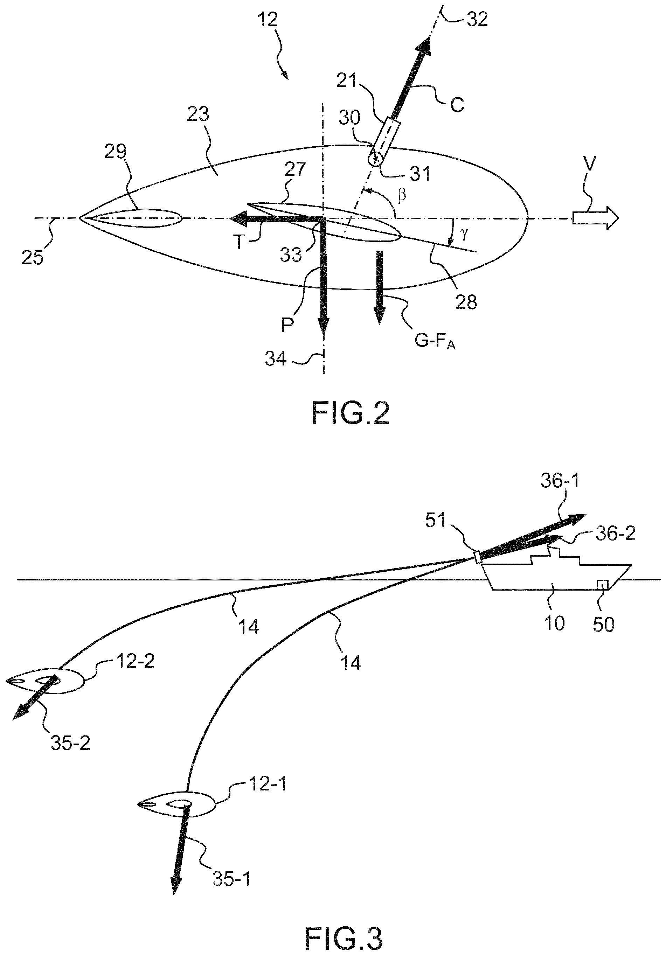

La figure 2 représente le poisson 12 de profil. Le poisson 12 comprend une crosse 21 configurée pour permettre la fixation du poisson 12 sur le câble 14. La crosse 21 comprend un connecteur mécanique éventuellement démontable et en cas de besoin un connecteur, par exemple électrique ou optique, permettant de faire transiter des informations et/ou de la puissance entre le poisson 12 et le câble 14. Le poisson 12 est configuré pour se déplacer dans l'eau en translation selon une direction 25 représentée horizontalement sur la figure 2. Le poisson 12 comprend un bâti 23 et au moins une aile 27 permettant de générer pour le poisson 12 une portance P hydrodynamique dirigée vers le bas lorsque le poisson 12 se déplace selon la direction 25. Le poisson 12 lui-même et d'autres appendices du poisson 12 participent à la génération de la portance hydrodynamique globale du poisson 12. L'aile 27 génère principalement la portance hydrodynamique globale du poisson 12. L'aile 27 a par exemple un profil symétrique autour d'une direction 28. Pour générer la portance P, la direction 28 de l'aile 27 est inclinée d'un angle γ par rapport à la direction 25. L'angle γ est orienté négativement dans le sens trigonométrique afin de diriger la portance P vers le bas. Le poisson 12 peut comprendre également un empennage 29 situé vers l'arrière du poisson 12 selon le sens de déplacement du poisson le long de la direction 25. L'empennage 29 permet d'assurer la stabilité du déplacement du poisson 12 selon la direction 25.

La crosse 21 est mobile en rotation par rapport au bâti 23 autour d'un axe horizontal 30 perpendiculaire à la direction principale 25. L'axe 30 est perpendiculaire au plan de la figure 2. L'axe horizontal 30 et la direction 25 sont définis par rapport aux formes extérieures du poisson 12 l'orientant dans l'eau lorsqu'il est tracté par le câble 14. Le poisson 12 comprend par exemple une liaison pivot 31 permettant d'articuler la crosse 21 et le bâti 23 entre eux. La liaison pivot 31 permet à la crosse 21 de tourner par rapport au bâti 23 autour de l'axe horizontal 30. La crosse 21 possède par exemple un manchon dans lequel le câble 14 est enfilé. Le manchon s'étend selon un axe 32. Au voisinage de la crosse 21, le câble 14 s'étend aussi selon l'axe 32. Plus précisément, le câble 14 et la crosse 21 sont solidaires l'un de l'autre. La liaison entre le câble 14 et la crosse 21 est de type liaison complète encore appelée liaison encastrement. On définit un angle β entre l'axe 32 et la direction principale 25 autour de l'axe horizontal 30. Au voisinage du poisson 12, le câble 14 fait un angle β avec la direction principale horizontale 25.

La liaison entre la crosse 21 et le bâti 23 peut comprendre plus d'un degré de liberté en rotation. Il peut s'agir d'une rotule à doigt à deux degrés de liberté ou d'une rotule à trois degrés de liberté. Pour la mise en oeuvre de l'invention seul l'angle β défini autour de l'axe horizontal 30 est pris en compte.

Outre la portance P, le poisson est soumis à différentes forces lorsqu'il se déplace selon la direction 25 : son poids G et la poussée d'Archimède $F_A$, tous deux représentés par un même vecteur sur la figure 2, sa trainée T et la traction C exercée par le câble 14. Pour ne pas surcharger la figure 2, on suppose l'antenne 13 absente. La présence éventuelle d'une antenne 13 augmenterait la trainée T. En première approche, lorsque le poisson 12 avance à vitesse constante selon la direction 25, la somme vectorielle des différentes forces auxquelles il est soumis est nulle. Afin d'assurer l'équilibre statique des efforts s'exerçant sur le poisson, l'angle β vérifie la relation suivante :

$$\beta = \arctan(\frac{G - F_A + P}{T}) \qquad (1)$$

Le poisson 12 comprend des moyens pour modifier la portance hydrodynamique de l'aile 27 et donc la portance hydrodynamique globale P du poisson 12. La portance P est ici considérée comme positive lorsqu'elle est dirigée vers le bas. En fonctionnement opérationnel le poisson 12 possède une portance appelée par la suite portance opérationnelle. Cette portance est assurée par un angle γ d'inclinaison de l'aile 27 orienté vers le bas. Le signe de l'angle γ est considéré positivement dans le sens trigonométrique. L'angle γ a donc une valeur négative, par exemple de l'ordre de -8°, pour diriger la portance P vers le bas et assurer la mission du poisson 12 en condition opérationnelle. Il est bien entendu que cette valeur d'angle peut être adaptée en fonction de la portance souhaitée et du profil de l'aile 27.

Pour réduire la traction C que le câble 14 doit encaisser pour tracter le poisson 12, la portance P du poisson 12 est réduite en modifiant l'angle γ. En effet, en réduisant la portance P, la somme vectorielle des efforts exercés sur le poisson 12 pour équilibrer la traction C se trouve réduite et par conséquent le module de la traction C.

La réduction de la portance P peut être réalisée au moyen d'une aile monobloc dont on peut modifier l'inclinaison. Il est également possible d'adjoindre un volet mobile en extrémité d'une aile fixe.

La réduction de la portance peut bien entendu aller jusqu'à annuler la portance et même la rendre négative, c'est-à-dire dirigée vers le haut et tendant à faire remonter le poisson 12 vers la surface. Néanmoins une portance trop fortement négative tendrait à augmenter la traction C sur le câble 14. Une remontée du poisson 12 peut présenter un intérêt lors de l'apparition d'un haut fond.

Pour un angle γ donné, la portance P et la trainée T sont fonction de la vitesse V du poisson 12 selon la direction 25. Cette vitesse est en première approche égale à la vitesse du navire 10 lorsque le poisson 12 est à l'équilibre. Plus la vitesse V augmente plus la portance P et la trainée T sont grandes. Pour maintenir l'équilibre des efforts exercés sur le poisson 12, la valeur algébrique de la traction C augmente et l'angle β augmente également. Pour un angle γ donné, il existe une fonction reliant l'angle β et la valeur algébrique de la traction T. En pratique, l'angle β varie en fonction de la portance P et de la trainée T. Les dimensions du poisson 12 sont définies de façon à ce que l'angle β varie en fonction de la vitesse V. Dans le cas illustré, lorsque la vitesse V augmente, la valeur algébrique de la trainée T augmente plus que la valeur algébrique de la portance P. Ainsi lorsque la vitesse V augmente, l'angle β diminue. Alternativement, il serait possible de définir un poisson de sorte que lorsque la vitesse V augmente, la valeur algébrique de la trainée T augmente moins que la valeur algébrique de la portance P.

L'invention tire avantage de cette relation en pilotant l'orientation γ de l'aile 27 en fonction de l'angle β. En réduisant l'angle γ et par le fait la portance P de l'aile 27, afin de conserver le poisson 12 en équilibre, le module de la traction C s'en trouve réduit.

Autrement dit, selon l'invention, l'orientation de l'aile 27 définie par l'angle γ est fonction d'un angle formé entre la crosse 21 et le bâti 23 autour de l'axe horizontal 30. Pour simplifier, on considère cet angle comme étant l'angle β entre le câble 14 au voisinage du poisson 12 et la direction principale 25. En pratique, l'angle entre la crosse 21 et le bâti 23 utilisé pour modifier l'orientation de l'aile 27 peut être décalé d'une valeur fixe en fonction de la configuration des moyens de fixation du câble 14 à la crosse 21. Pour assurer le bon fonctionnement de l'invention une variation de l'angle β entraine une variation de l'orientation de l'aile 27.

La figure 3 représente deux configurations dans lesquelles le navire 10 tracte le poisson 12. La première configuration est la configuration opérationnelle et le poisson 12 est repéré 12-1. Dans la configuration opérationnelle, l'aile 27 assure une portance dirigée vers le bas. La somme vectorielle des efforts dus au poids G, à la poussée d'Archimède $F_A$, à la trainée T et à la portance P est repérée 35-1. Cette somme vectorielle est opposée à la traction C du câble 14 sur le poisson 12. Au niveau du navire 10, la résultante 35-1 entraine un effort de traction 36-1 sur le câble 14. La seconde configuration est appelée configuration de fuite et le poisson est repéré 12-2. Dans la configuration de fuite, pilotée par une variation de l'angle β, la portance de l'aile 27 a été réduite. La somme vectorielle des efforts dus au poids G, à la poussée d'Archimède $F_A$, et à la trainée est repérée 35-2. On considère que dans la configuration de fuite, la portance P est nulle. Au niveau du navire 10, la résultante 35-2 entraine un effort de traction 36-2 sur le câble 14.

Le module de l'effort de traction 36-2 est inférieur au module de l'effort de traction 36-1. Si toute la chaîne de remorquage (treuil, câble et poisson) est dimensionnée pour fonctionner avec un effort 36-1 à une vitesse donnée pour le navire 10, le fait de réduire la portance du poisson 12 permet d'augmenter la vitesse donnée jusqu'à atteindre un effort 36-2 dont le module est égal au module de l'effort 36-1 à vitesse inférieure.

Sur la figure 2 une seule aile 27 est représentée sur un côté du poisson 12. Il est classique que le poisson 12 comprenne deux ailes 27 disposées chacune symétriquement par rapport à la direction 25. Dans ce cas, les moyens pour modifier l'orientation γ s'applique avantageusement de façon coordonnée aux deux ailes 27. De façon plus générale, le poisson 12 peut comprendre plus de deux ailes générant toutes une portance dirigée vers le bas. L'invention présente déjà un intérêt en réduisant la portance de l'une des ailes. A l'inverse le poisson 12 peut ne comprendre qu'une seule aile par exemple disposée sur le nez du poisson 12. L'invention consiste alors en la réduction de portance de cette aile unique.

Sur la figure 2, l'aile 27 est mobile en rotation par rapport au bâti 23 autour d'un axe horizontal 33 parallèle à l'axe 30 de rotation de la crosse 21. L'empennage 29 du poisson 12 est ici fixe par rapport au bâti 23. Cette configuration permet de conserver l'assiette globale du poisson 12 lorsque l'angle γ est modifié. Les directions du poids G et de la poussée d'Archimède $F_A$ ne sont pas modifiées par rapport au bâti 23. Le poisson se trouve alors dans de meilleures conditions pour supporter une augmentation de sa vitesse. Alternativement, il est possible de conserver une aile fixe par rapport au bâti 23 et d'agir sur l'orientation de l'empennage pour modifier la portance de l'aile. Cette configuration à empennage mobile permet de limiter les efforts à exercer sur l'appendice mobile, en l'occurrence l'empennage, pour réduire la portance du poisson 12.

Habituellement, les appendices destinés à faire varier l'assiette d'un objet naviguant dans un fluide, dans l'air ou dans l'eau, sont articulés autour d'un axe situé au voisinage de leur bord d'attaque afin d'assurer leur stabilité. Pour la mise en oeuvre de l'invention, il est avantageux de disposer l'axe 33 de rotation de l'aile 27 par rapport au bâti 23 sensiblement au centre de rotation instantané du poisson 12 lorsque celui-ci pivote du fait d'une modification de l'orientation $\gamma$ de l'aile 27. Cette disposition permet de limiter le couple à fournir pour faire tourner l'aile 27.

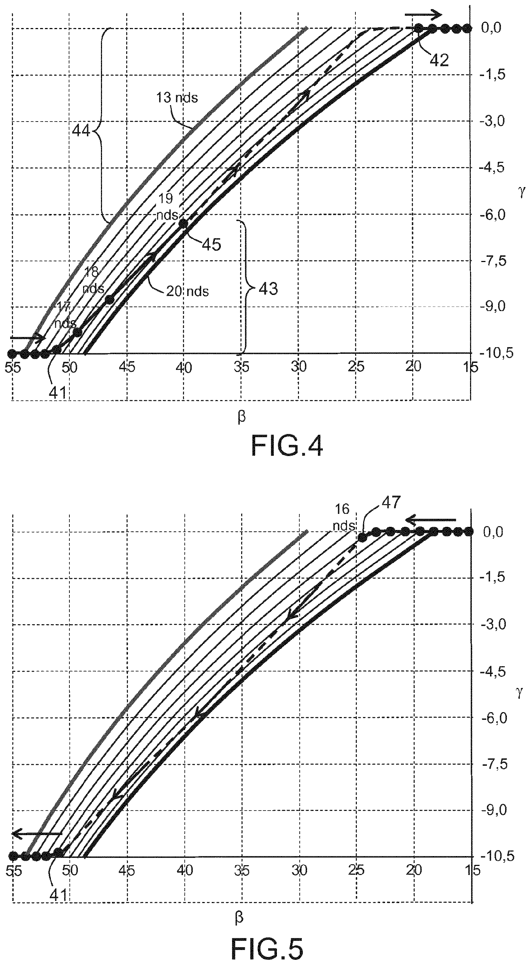

Les figures 4 et 5 représentent un exemple de loi de pilotage de l'angle $\gamma$ d'orientation de l'aile 27 en fonction de l'angle $\beta$ de la crosse 21 par rapport au bâti 23. Sur ces deux figures, l'angle $\beta$ est représenté en abscisse et l'angle $\gamma$ en ordonnée. Pour cette loi, la figure 4 représente l'évolution de l'angle $\gamma$ lorsque l'angle $\beta$ diminue et la figure 5 lorsque l'angle $\beta$ augmente. La loi est représentée sur un faisceau de courbes représentant pour chacune à une vitesse donnée V l'angle $\beta$ que prend naturellement la crosse 21 en fonction de l'angle $\gamma$ d'orientation de l'aile 27 en l'absence de loi de pilotage. Autrement dit, à une vitesse V et un angle $\gamma$ choisis, les différentes forces exercées sur le poisson 12 s'équilibrent avec un angle de crosse $\beta$ donnée. Ces courbes et les valeurs numériques associées ne sont données qu'à titre d'exemple et sont fonction de la géométrie et poids du poisson 12. Sur les figures 4 et 5, le faisceau de courbes est représenté par pas de 1 noeud entre 13 noeuds et 20 noeuds. On rappelle qu'un noeud vaut environ 0,514m/s. Le noeud est utilisé ici plutôt que l'unité du système international de vitesse car plus couramment utilisé dans le domaine maritime.

La loi est définie pour qu'entre les deux vitesses extrêmes de 13 et 20 noeuds, ait lieu une transition entre la valeur de portance opérationnelle et la valeur de portance de fuite.

Par exemple, pour une vitesse inférieure à 16 noeuds, l'aile 27 est orientée vers le bas pour obtenir une portance opérationnelle. Sur les figures 4 et 5, l'angle $\gamma$ est fixé à une première valeur, par exemple négative de -10,5°, pour obtenir la portance opérationnelle. Pour une vitesse inférieure à 16 noeuds, l'angle de crosse est supérieur à 52° et l'angle $\gamma$ reste constant à la valeur de -10,5°. La loi est définie de façon à réduire l'angle $\gamma$ lorsque l'angle de crosse devient inférieur à 52°. Le seuil de déclenchement de la réduction de portance de l'aile 27 est fixé 52°. Ce seuil porte le repère 41 sur la figure 4. Autrement dit, puisqu'il existe une relation entre angle de crosse $\beta$ et vitesse V, l'angle $\gamma$ est réduit lorsque la vitesse devient supérieure à 16 noeuds.

Par ailleurs, on définit un second seuil 42 d'angle $\beta$ en deçà duquel l'angle $\gamma$ d'orientation de l'aile 27 est fixé à une seconde valeur supérieure à la valeur définie lorsque l'angle de crosse $\beta$ est supérieur au premier seuil 41. La seconde valeur d'angle $\gamma$ peut rester négative ou positive ou nulle. Dans l'exemple illustré la seconde valeur est de 0°. Une valeur positive peut présenter de l'intérêt pour générer une portance vers le haut et compenser en partie le poids G. Dans l'exemple représenté, au seuil 42 la valeur de l'angle $\beta$ est de 19°. A cette valeur la portance est réduite par rapport à la portance opérationnelle. Cette portance peut être appelée portance de fuite.

Entre les deux seuils 41 et 42, la loi de pilotage de l'angle $\gamma$ peut prendre différentes formes. Il est par exemple possible de définir des parties stables et instables de la loi de pilotage. Une partie de la loi est dite stable pour une valeur de $\beta$ donnée, lorsque la dérivée de la fonction $\gamma$ = f($\beta$) est plus faible que la dérivée de la courbe de vitesse dans le repère $\beta$-$\gamma$. A l'inverse, une partie de la loi est dite instable, pour une valeur de $\beta$ donnée, lorsque la dérivée de la fonction $\gamma$ = f($\beta$) est plus forte que la dérivée de la courbe de vitesse dans le repère $\beta$-$\gamma$. Dans une partie stable de la loi, lorsque le poisson 12 passe par une vitesse V donnée, on a une même valeur des angles $\beta$ et $\gamma$ aussi bien lorsque la vitesse augmente que lorsque la vitesse diminue. Au contraire, dans une partie instable de la loi de pilotage, lorsque le poisson accélère et parvient à une vitesse donnée, l'angle $\gamma$ d'orientation de l'aile 27 est tel que l'angle $\beta$ de la crosse 21 tend à se réduire automatiquement entrainant avec lui une augmentation de l'angle $\gamma$ jusqu'à atteindre une partie stable de la loi de pilotage.

Dans l'exemple représenté, sur la figure 4, lorsque l'angle $\beta$ diminue, c'est-à-dire que la vitesse du poisson 12 augmente au-delà de 16 noeuds, la loi de pilotage est stable jusqu'à un angle de crosse de 40° correspondant à une vitesse de 19 noeuds. Cette partie stable est repérée 43 sur la figure 4. Au-delà de l'angle de crosse $\beta$ de 40°, la loi de pilotage entre dans une partie instable 44. Autrement dit, si à 19 noeud, le poisson 12 tend à accélérer, l'angle $\gamma$ d'orientation de l'aile 27 tend à croitre conjointement avec une diminution de l'angle $\beta$ de la crosse 21 jusqu'à atteindre le seuil 42 en conservant la vitesse de 19 noeuds sensiblement constante, à son accélération près. Dans l'exemple illustré à l'aide de la figure 4, le seuil 42 correspond à un angle de crosse $\beta$ de 19° et à un angle d'orientation de l'aile 27 $\gamma$ de 0°. Le seuil entre les parties stable et instable est repéré 45 sur la figure 4. La partie instable de la courbe permet de réduire rapidement la portance de l'aile 27 et l'angle $\beta$ de crosse. Le module de la traction C diminue également rapidement, ce qui permet au navire 10 d'accélérer encore pour une meilleure fuite.

Autrement dit, dans la partie stable de la loi de pilotage, dans le repère $\beta$-$\gamma$ la pente de la courbe définissant la loi de pilotage est plus faible que la pente de chacune des courbes du faisceau définissant l'équilibre du poisson 12 en fonction des angles $\beta$ et $\gamma$. Plus précisément, la courbe définissant la loi de pilotage croise plusieurs courbes du faisceau et à chaque intersection, la pente de la courbe définissant la loi de pilotage est plus faible que la courbe du faisceau. Au contraire dans la partie instable de la loi de pilotage la pente de la courbe définissant la loi de pilotage est plus forte que la courbe du faisceau intersectée. Appliqué à l'exemple de la figure 4, lorsque la vitesse croit et atteint 19 noeuds, le poisson 12 remonte automatiquement jusqu'à atteindre le point d'équilibre défini par le seuil 42. En pratique, le poisson 12 peut prendre plusieurs minutes pour traverser la partie instable et passer du point 45 au point 42 du fait de son inertie.

Si le navire 10 continue d'accélérer au-delà des 19 noeuds, l'angle β de la crosse 21 va continuer à diminuer, mais l'angle γ d'orientation de l'aile 27 reste fixé à une valeur de 0°. Le navire peut dépasser les 20 noeuds avec un effort réduit de traction sur le câble 14 par rapport à l'effort de traction qui serait généré avec une portance opérationnelle obtenue avec un angle γ d'orientation de l'aile 27 de -10,5°.

Lorsque la vitesse du poisson 12 diminue, on se réfère à la figure 5. La loi de pilotage γ = f(β) est, dans l'exemple considéré, la même à l'accélération et à la décélération. Il est également possible de définir des lois différentes à l'accélération et à la décélération en fonction des effets recherchés.

Tant que la vitesse du poisson 12 est supérieure à 16 noeuds, l'angle γ d'orientation de l'aile 27 reste à 0°. A 16 noeuds, l'équilibre du poisson 12 est obtenu pour β = 25° et γ = 0°. Ce point d'équilibre est repéré 47 sur la figure 5. Lorsqu'à 16 noeuds, le poisson 12 tend à décélérer, l'angle γ d'orientation de l'aile 27 tend à décroître conjointement avec une augmentation de l'angle β de la crosse 21 jusqu'à atteindre le seuil 41 en conservant la vitesse de 16 noeuds sensiblement constante, à sa décélération près. Lorsque la vitesse du poisson 12 diminue, la loi de pilotage est complètement instable entre les deux angles γ d'orientation de l'aile 27 de 0° à -10,5°. En effet, lors du passage du point 47 vers le point 41, la courbe définissant la loi de pilotage croise des courbes iso vitesse du faisceau supérieures à 16 noeuds. La vitesse du poisson 12 étant inférieure aux courbes du faisceau traversées par la courbe de la loi de pilotage, le poisson 12 tend automatiquement à rejoindre le point 41 où β = 52° et γ = -10,5°.

La partie instable de la loi de pilotage permet d'obtenir une hystérésis entre l'accélération et la décélération. Plus précisément, à l'accélération, il faut atteindre la vitesse de 19 noeuds pour entrer dans la partie instable et atteindre le seuil 42. Par contre à la décélération tant que la vitesse reste au-dessus de 16 noeuds, l'orientation γ de l'aile 27 reste à sa valeur de 0°.

Dans l'exemple représenté, la loi de pilotage comprend une partie stable et une partie instable. Il est possible de définir l'ensemble de la loi dans un domaine stable. Il n'y a alors aucune hystérésis. A l'inverse, il est possible de définir la loi de pilotage de façon complètement instable entre les deux seuils 41 et 47 ce qui permet de réduite la traction sur le câble de façon plus rapide. Une loi de pilotage définie de façon complètement instable tend à augmenter l'hystérésis. Une hystérésis trop importante imposerait au navire 10 de ralentir de façon trop importante pour récupérer une portance opérationnelle.

Il est préférable d'éviter de définir une loi de pilotage qui suit une des courbes du faisceau, c'est-à-dire entre les domaines stable et instable. En effet, dans ce cas, si le navire 10 se maintient à cette vitesse, on risque une oscillation de l'aile 27 entre ses deux orientations de seuil.

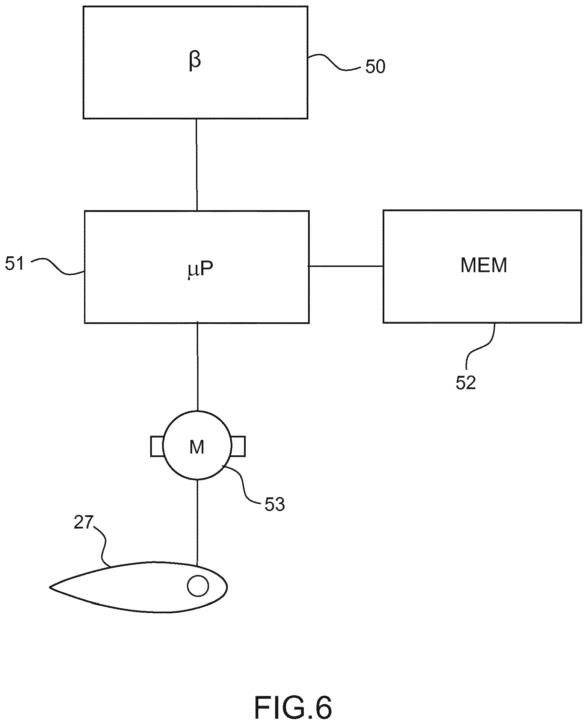

La figure 6 décrit un premier mode de réalisation du pilotage de l'orientation de l'aile 27 en fonction de l'angle β. Le poisson 12 comprend un capteur d'angle 50 permettant de déterminer la position angulaire de la crosse 21 par rapport au bâti 23. Le capteur 50 est par exemple un résolveur disposé dans la liaison pivot 31. Tout autre type de capteur d'angle est utilisable. Le poisson 12 comprend également un calculateur 51, une mémoire 52 et un actionneur 53 permettant de modifier l'orientation de l'aile 27 autour de son axe 33. L'actionneur 53 peut être un moteur électrique pas à pas orientant l'aile 27. Pour remplir les fonctions du calculateur 51 et de la mémoire 52, on peut mettre en oeuvre un microcontrôleur. Le calculateur 51 est configuré pour piloter l'actionneur 53 en fonction de l'angle β déterminé par le capteur 50. La mémoire 52 contient la loi de pilotage de l'actionneur 53 en fonction de l'angle β et un programme permettant la mise en oeuvre de la loi de pilotage.

L'intérêt principal du premier mode de réalisation réside dans sa souplesse de mise en oeuvre. Il est en effet possible de modifier la loi de pilotage facilement en remplaçant le contenu de la mémoire 52. En revanche, la présence de composants électroniques peut dégrader la fiabilité de ce mode de réalisation.

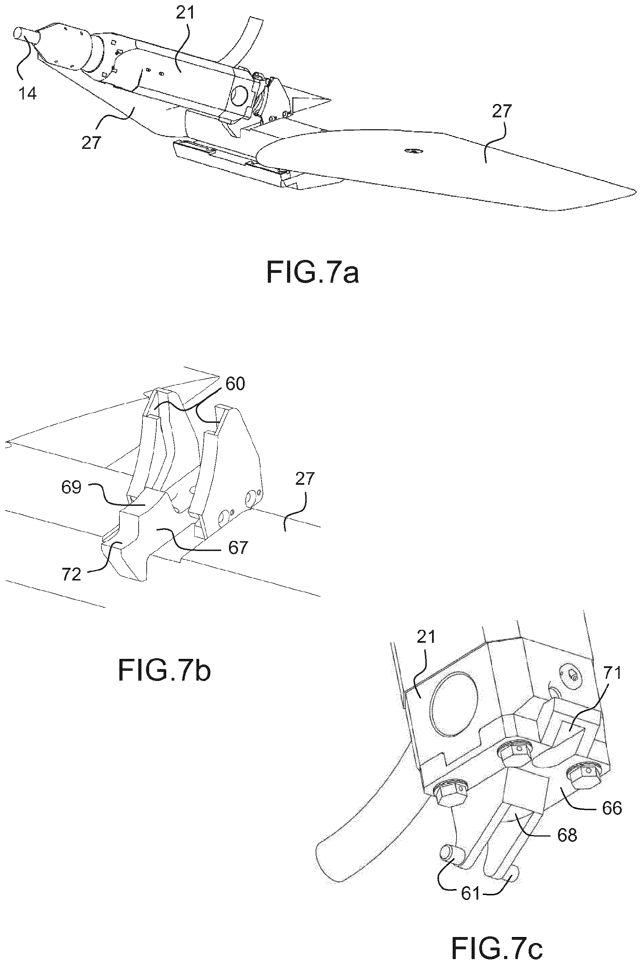

Les figures 7a, 7b et 7c décrivent un second mode de réalisation du pilotage de l'orientation de l'aile 27 en fonction de l'angle β. Le second mode de réalisation est complètement mécanique sans motorisation. Ce sont uniquement les efforts hydrodynamiques (trainée et portance), de pesanteur, de traction du câble et d'Archimède s'exerçant sur le poisson 12 qui permettent de modifier l'orientation γ de l'aile 27 en fonction de l'angle β. Le poisson 12 comprend une came et un suiveur de came. Dans l'exemple représenté, la came est solidaire de l'aile 27 et le suiveur de came est solidaire de la crosse 21. Alternativement, il est également possible de prévoir une came solidaire de la crosse 21 et un suiveur de came solidaire de l'aile 27. Le suiveur de came s'appuie sur une forme de la came lors de la rotation de la crosse 21 autour de l'axe horizontal 30. La forme de la came définit la loi de pilotage γ = f(β).

La came et le suiveur de came sont avantageusement disposés à l'intérieur du bâti 23 afin que ce mécanisme n'altère pas les formes hydrodynamiques du poisson 12. La figure 7a représente en perspective, la crosse 21, deux ailes 27 ainsi que la came et le suiveur de came. Pour faciliter la compréhension, le bâti 23 n'est pas représenté. La figure 7b représente en perspective la came solidaire des ailes 27 et la figure 7c représente le suiveur de came solidaire de la crosse 21.

Dans l'exemple représenté, la came est formée par deux rainures symétriques 60 et le suiveur de came est formé par deux pions 61, chacun guidé dans une des rainures 60. On a vu précédemment, que l'axe 33 de rotation de l'aile 27 par rapport au bâti 23 peut être disposé de façon sensiblement sécante avec un axe vertical 34 portant l'effort de portance généré par l'aile 27. Ceci permet de limiter le couple nécessaire à la rotation de l'aile. Ce couple peut être même quasi nul, négatif ou positif. Dans cette configuration, il est utile de prévoir que le suiveur de came soit en appui bidirectionnel sur la came. Les rainures 60 permettent cet appui bidirectionnel. Autrement dit dans chacune des rainures, le pion 61 considéré peut s'appuyer sur une des faces latérales de la rainure 60 correspondante.

D'autres formes de came et de suiveur de cames sont bien entendu possibles dans le cadre de l'invention.

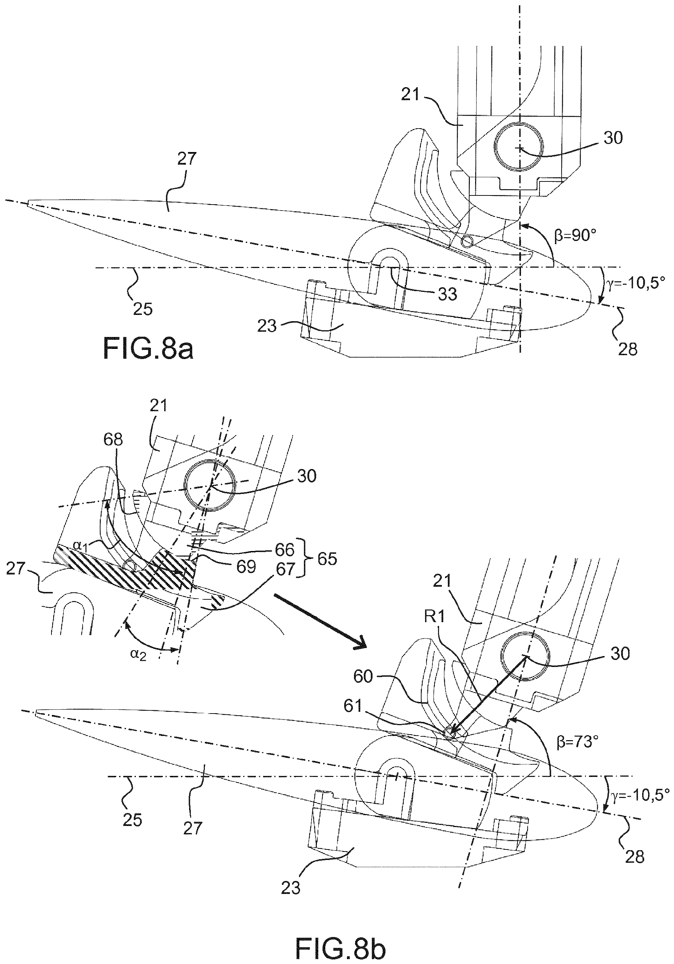

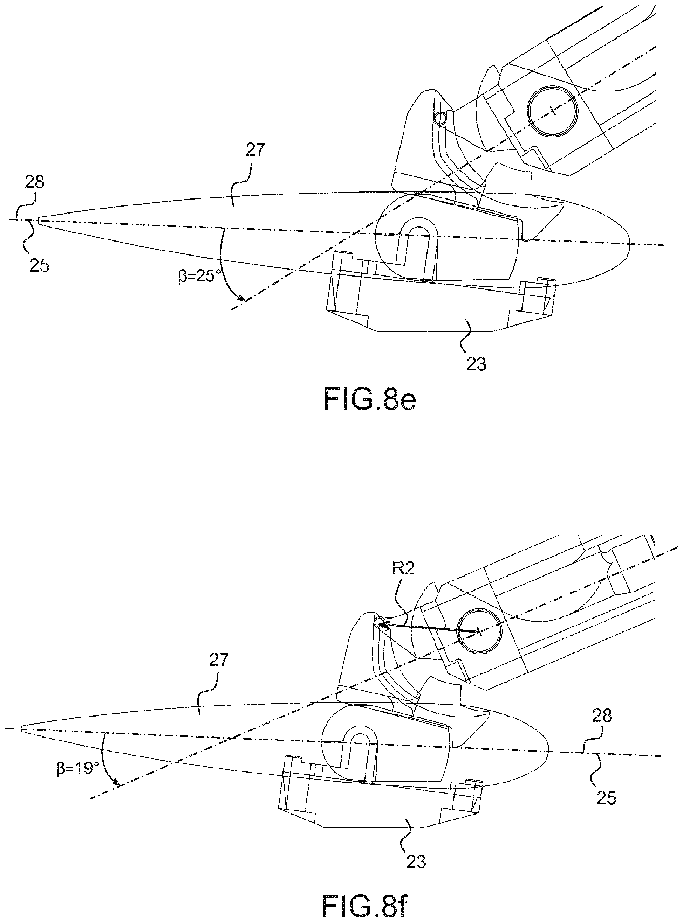

Les figures 8a à 8f représentent différentes orientations γ de l'aile 27 en fonctions de l'angle β de la crosse 21 pour le second mode de réalisation. La description de ces figures est faite lorsque l'angle β augmente de la figure 8a vers la figure 8f. Inversement, lorsque l'angle β diminue, la configuration relative de la crosse 21 et de l'aile 27 passent de la figure 8f vers la figure 8a.

Sur la figure 8a, l'angle de crosse β est égal à 90° et l'orientation γ de l'aile 27 est de -10,5°. Une telle configuration peut notamment être obtenue en cas de vitesse nulle du navire 10. Sur la figure 8b, l'angle de crosse β est égal à 73° et l'orientation γ de l'aile 27 est également de -10,5°. Dans ces deux configurations, l'angle de crosse β est supérieur au seuil 41 et l'orientation γ de l'aile 27 reste constante de façon à générer la portance opérationnelle.

Tant que l'angle de crosse β reste supérieur au seuil 41, le profil de la came, c'est-à-dire la forme des rainures 60 sur lequel s'appuient les deux pions 61, est un arc de cercle de rayon R1 centré sur l'axe 30 de rotation de la crosse 21. Il est possible de sécuriser cette partie de la loi de pilotage en ajoutant un verrou 65 formé par deux pièces mécaniques 66 et 67 l'une, 66, fixée à la crosse 21 et l'autre, 67, fixée à l'aile 27. Dans la pratique, lors de la mise à l'eau ou lors de la récupération du poisson 12 à partir du navire 10, l'angle de crosse β est généralement égal ou voisin de 90° car le poisson 12 est suspendu hors de l'eau par le câble 14. Lors de ces manoeuvres, l'aile 27 risque de recevoir des chocs. Le verrou 65 permet d'encaisser ces éventuels chocs afin d'éviter que les rainures 60 et les pions 61 ne soient sollicités.

Le verrou 65 est visible dans un encart de la figure 8b, dans lequel les deux pièces mécaniques 66 et 67 sont représentées en coupe. La pièce 66 comprend une portion cylindrique 68 centrée sur l'axe 30 et s'étendant dans un secteur angulaire $\alpha_1$. La pièce 67 comprend une portion cylindrique 69 centrée sur l'axe 30 et s'étendant dans un secteur angulaire $\alpha_2$. Les deux portions cylindriques 68 et 69 ont le même rayon, au jeu fonctionnel près et sont appuyées l'une contre l'autre tant que l'angle β reste supérieur au seuil 41. Dans la rotation de la crosse 21, lorsque le secteur angulaire $\alpha_1$ recouvre le secteur angulaire $\alpha_2$, le verrou 65 empêche toute rotation de l'aile 27 et l'angle γ reste figé à une valeur de -10,5°. Lorsque le secteur angulaire $\alpha_1$ ne recouvre plus le secteur angulaire $\alpha_2$, le verrou 65 est libéré. Lorsque les deux secteurs angulaires $\alpha_1$ et $\alpha_2$ se recouvrent, le profil de la came, est un arc de cercle de rayon R1. Il est même possible de se passer partiellement de came. Par exemple pour β = 90°, les pions 61 ne sont pas en appui sur les rainures 60 correspondantes. Les rainures 60 prennent le relais du verrou 65 avant que les secteurs angulaires $\alpha_1$ et $\alpha_2$ ne quittent leur recouvrement. Les formes mises en oeuvre pour le verrou 65 peuvent également être employées pour figer la valeur de l'angle γ à la valeur de 0° lorsque l'angle β est inférieur à la valeur du seuil 42.

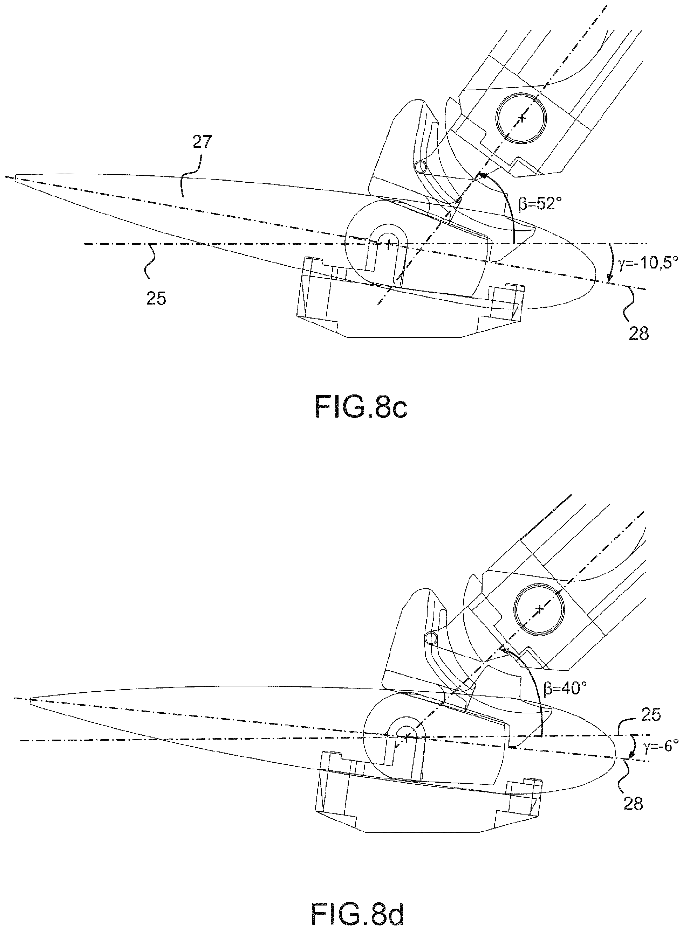

Sur la figure 8c, le verrou 65 est libéré et l'angle de crosse β atteint le seuil 41 à une valeur de 52°. L'orientation γ de l'aile 27 est toujours de -10,5°. Sur la figure 8d, l'angle de crosse β atteint le seuil 45 à une valeur de 40°. L'orientation γ de l'aile 27 est de -6°. Sur la figure 8e, l'angle de crosse β est de 25°. Cet angle β correspond au point d'équilibre 47 représenté sur le figure 5. L'orientation γ de l'aile 27 y est de 0°. Sur la figure 8f, l'angle de crosse β atteint le seuil 42 et a une valeur de 19° sans modifier l'orientation γ de l'aile 27 à 0°. Au-delà du seuil 42, l'orientation γ de l'aile 27 reste constante à 0°. Un second verrou peut immobiliser la crosse 21 par rapport au bâti 23 lorsque l'angle β atteint une valeur minimum, 15° dans l'exemple représenté. Le verrou peut être réalisé au moyen des deux pièces mécaniques 66 et 67 comprenant chacune une butée, respectivement 71 et 72 prenant appui l'une sur l'autre lorsque l'angle β atteint la valeur souhaitée. Les deux butées 71 et 72 du verrou sont visibles sur les figures 7b et 7c. Comme pour le verrou 65, les formes des butées 71 et 72 peuvent être mises en oeuvre pour immobiliser la crosse 21 par rapport au bâti 23 lorsque l'angle β atteint une valeur maximum, par exemple 90° comme représenté sur la figure 8a.

**Revendications**

1. Poisson destiné à être immergé et remorqué par un câble (14), le poisson (12) comprenant un bâti (23) configuré pour se déplacer dans l'eau selon une direction principale horizontale (25) et au moins un appendice (27) configuré pour générer pour le poisson (12) une portance hydrodynamique (P) dirigée vers le bas lorsque le poisson (12) se déplace dans l'eau sous l'effet du remorquage, l'appendice (27) étant orientable afin de modifier sa portance, le poisson (12) comprenant une crosse (21) mobile en rotation par rapport au bâti (23) autour d'un axe horizontal (30) perpendiculaire à la direction principale horizontale (25), le câble (14) étant destiné à être fixé à la crosse (21), le poisson (12) comprenant un mécanisme non motorisé configuré de sorte qu'une orientation (γ) de l'appendice (27), lui permettant de modifier la portance (P), est fonction d'un angle (β) formé entre la crosse (21) et le bâti (23) défini à partir de la direction principale horizontale (25), une loi reliant l'angle (β) à l'orientation (γ) de l'appendice (27) étant est- configurée pour que lorsque la valeur de l'angle (β) décroit, l'orientation (γ) de appendice (27) est augmentée de façon à réduire la portance hydrodynamique (P) du poisson (12) et au-delà d'une première valeur d'angle (β) donnée, l'orientation (γ) de l'appendice (27) étant est- fixe de façon à générer une portance dite opérationnelle du poisson (12) et en deçà de la première valeur d'angle (β) donnée, l'orientation (γ) de appendice (27) étant eet- augmentée lorsque la valeur de l'angle (β) décroit de façon à réduire la portance par rapport à la portance opérationnelle.

2. Poisson selon la revendication 1, **caractérisé en ce que** sur une plage de valeur de l'angle (β), la loi est instable de sorte qu'une valeur donnée de l'orientation (γ) de l'appendice (27) entraine une réduction de l'angle (β).

3. Poisson selon l'une des revendications précédentes, **caractérisé en ce qu'**en deçà d'une deuxième valeur d'angle (β) donnée inférieure à la première valeur d'angle donnée, l'orientation (γ) de l'appendice (27) est fixe de façon à générer une portance dite de fuite inférieure à la portance opérationnelle.

4. Poisson selon la revendication 3, **caractérisé en ce qu'**en deçà de la deuxième valeur d'angle (β) donnée, l'orientation de l'appendice (27) est positive ou nulle.

5. Poisson selon l'une des revendications 3 ou 4, **caractérisé en ce qu'**on définit une troisième valeur d'angle (β) intermédiaire entre la première et la deuxième valeur d'angle et **en ce qu'**entre la première et la troisième valeur d'angle une loi reliant l'angle (β) à l'orientation (γ) de l'appendice (27) est configurée pour maintenir l'angle (β) à une valeur stable.

6. Poisson selon les revendications 2 et 5, **caractérisé en ce que** la plage de valeur de l'angle (β) où la loi est instable est définie entre la troisième et la deuxième valeur d'angle, et **en ce que** la loi est configurée de façon à orienter l'appendice (27) pour atteindre la portance de fuite.

7. Poisson selon l'une des revendications précédentes, **caractérisé en ce qu'**il comprend une aile (27) portante formant l'appendice et un empennage (29) stabilisateur configuré pour maintenir sensiblement constante une assiette du poisson (12) lors de modifications de l'orientation (γ) de l'appendice (27).

8. Poisson selon l'une des revendications précédentes, **caractérisé en ce que** l'appendice (27) est mobile en rotation par rapport au bâti (23) autour d'un second axe horizontal (33), la mobilité de l'appendice (27) permettant de modifier la portance (P) du poisson (12), et **en ce que** le second axe horizontal (33) de rotation de l'appendice (27) est disposé sensiblement au centre de rotation instantané du poisson (12) lorsque celui-ci pivote du fait d'une modification de l'orientation (γ) de l'appendice (27).

9. Poisson selon l'une des revendications précédentes, **caractérisé en ce qu'**il comprend une came (60) et un suiveur de came (61), l'un étant solidaire de l'appendice (27) et l'autre de la crosse (21), et **en ce que** le suiveur de came (61) s'appuie sur une forme de la came (60) lors de la rotation de la crosse (21) autour de l'axe horizontal (30).

10. Poisson selon la revendication 8, **caractérisé en ce qu'**il comprend un premier verrou (65) configuré pour maintenir l'appendice (27) à une orientation (γ) fixe lorsque la valeur de l'angle (β) est au-delà de la première valeur d'angle donnée.

11. Poisson selon l'une des revendications 9 ou 10 en tant que revendications dépendantes de la revendication 3, **caractérisé en ce qu'**il comprend un second verrou (71, 72) configuré pour immobiliser la crosse (21) par rapport au bâti (23) lorsque la valeur de l'angle (β) formé entre la crosse (21) et le bâti (23) est en deçà de la deuxième valeur d'angle donnée.

**Patentansprüche**

1. Schleppgerät, bestimmt zum Eintauchen und Schleppen mit einem Kabel (14), wobei das Schleppgerät (12) eine zum Bewegen im Wasser entlang einer horizontalen Hauptrichtung (25) konfigurierte Tragstruktur (23) und mindestens einen Anhang (27) umfasst, der zum Erzeugen eines nach unten gerichteten hydrodynamischen Auftriebs (P) für das Schleppgerät (12) konfiguriert ist, wenn das Schleppgerät (12) sich unter der Wirkung des Schleppens im Wasser bewegt, wobei der Anhang (27) orientiert werden kann, um seinen Auftrieb zu verändern, wobei das Schleppgerät (12) einen Kreuzkopf (21) umfasst, der in Bezug auf die Tragstruktur (23) um eine horizontale Achse (30) lotrecht zur horizontalen Hauptrichtung (25) drehbar ist, wobei das Kabel (14) zum Befestigen an dem Kreuzkopf (21) bestimmt ist, wobei das Schleppgerät (12) einen nicht motorisierten Mechanismus umfasst, der so konfiguriert ist, dass eine Orientierung (γ) des Anhangs (27), die es ihm ermöglicht, den Auftrieb (P) zu verändern, abhängig von einem Winkel ($\beta$) zwischen dem Kreuzkopf (21) und der Tragstruktur (23) ist, definiert auf der Basis der horizontalen Hauptrichtung (25), wobei ein Gesetz, das

den Winkel ($\beta$) mit der Orientierung ($\gamma$) des Ansatzes (27) verbindet, so konfiguriert ist, dass, wenn der Wert des Winkels ($\beta$) abnimmt, die Orientierung ($\gamma$) des Anhangs (27) vergrößert wird, um den hydrodynamischen Auftrieb (P) des Schleppgeräts (12) zu verringern, und wobei oberhalb eines ersten gegebenen Wertes des Winkels ($\beta$) die Orientierung ($\gamma$) des Anhangs (27) fest ist, um einen sogenannten Betriebsauftrieb des Schleppgeräts (12) zu erzeugen, und unterhalb des ersten gegebenen Winkelwertes ($\beta$) die Orientierung ($\gamma$) des Anhangs (27) erhöht wird, wenn der Wert des Winkels ($\beta$) abnimmt, um den Auftrieb in Bezug auf den Betriebsauftrieb zu reduzieren.

2. Schleppgerät nach Anspruch 1, **dadurch gekennzeichnet, dass** über einen Wertebereich des Winkels ($\beta$) das Gesetz instabil ist, so dass ein gegebener Wert der Orientierung ($\gamma$) des Anhangs (27) zu einer Verringerung des Winkels ($\beta$) führt.

3. Schleppgerät nach einem der vorhergehenden Ansprüche, **dadurch gekennzeichnet, dass** unterhalb eines gegebenen zweiten Winkelwertes ($\beta$), der kleiner als der gegebene erste Winkelwert ist, die Orientierung ($\gamma$) des Anhangs (27) fest ist, so dass ein sogenannter Fluchtauftrieb erzeugt wird, der kleiner als der Betriebsauftrieb ist.

4. Schleppgerät nach Anspruch 3, **dadurch gekennzeichnet, dass** unterhalb des zweiten gegebenen Winkelwertes ($\beta$) die Orientierung des Anhangs (27) positiv oder null ist.

5. Schleppgerät nach Anspruch 3 oder 4, **dadurch gekennzeichnet, dass** ein dritter Winkelwert ($\beta$) zwischen dem ersten und dem zweiten Winkelwert vorgegeben ist, und dadurch, dass zwischen dem ersten und dem dritten Winkelwert ein Gesetz, das den Winkel ($\beta$) mit der Orientierung ($\gamma$) des Anhangs (27) verbindet, so konfiguriert ist, dass der Winkel ($\beta$) auf einem stabilen Wert gehalten wird.

6. Schleppgerät nach den Ansprüchen 2 und 5, **dadurch gekennzeichnet, dass** der Wertebereich des Winkels ($\beta$), in dem das Gesetz instabil ist, zwischen dem dritten und dem zweiten Winkelwert definiert ist, und dadurch, dass das Gesetz so konfiguriert ist, dass der Anhang (27) zum Erreichen des Fluchtauftriebs orientiert wird.

7. Schleppgerät nach einem der vorhergehenden Ansprüche, **dadurch gekennzeichnet, dass** es einen den Anhang bildenden tragenden Flügel (27) und ein stabilisierendes Leitwerk (29) umfasst, das so konfiguriert ist, dass es einen Trimm des Schleppgeräts (12) bei Änderungen der Orientierung ($\gamma$) des Anhangs (27) im Wesentlichen konstant hält.

8. Schleppgerät nach einem der vorhergehenden Ansprüche, **dadurch gekennzeichnet, dass** der Anhang (27) in Bezug auf die Tragstruktur (23) um eine zweite horizontale Achse (33) drehbar ist, wobei die Beweglichkeit des Anhangs (27) es zulässt, den Auftrieb (P) des Schleppgeräts (12) zu verändern, und dadurch, dass sich die zweite horizontale Achse (33) zur Drehung des Anhangs (27) im Wesentlichen im momentanen Drehzentrum des Schleppgeräts (12) befindet, wenn dieser aufgrund einer Änderung der Orientierung ($\gamma$) des Anhangs (27) schwenkt.

9. Schleppgerät nach einem der vorhergehenden Ansprüche, **dadurch gekennzeichnet, dass** er einen Nocken (60) und einen Nockenfolger (61) umfasst, von denen einer mit dem Anhang (27) und der andere mit dem Kreuzkopf (21) fest verbunden ist, und dadurch, dass der Nockenfolger (61) bei der Drehung des Kreuzkopfs (21) um die horizontale Achse (30) auf einer Form des Nockens (60) aufliegt.

10. Schleppgerät nach Anspruch 8, **dadurch gekennzeichnet, dass** es einen ersten Riegel (65) umfasst, der zum Halten des Anhangs (27) in einer festen Orientierung ($\gamma$) konfiguriert ist, wenn der Wert des Winkels ($\beta$) über dem ersten gegebenen Winkelwert liegt.

11. Schleppgerät nach Anspruch 9 oder 10 als von Anspruch 3 abhängige Ansprüche, **dadurch gekennzeichnet, dass** es einen zweiten Riegel (71, 72) umfasst, der zum Fixieren des Kreuzkopfs (21) in Bezug auf die Tragstruktur (23) konfiguriert ist, wenn der Wert des zwischen dem Kreuzkopf (21) und der Tragstruktur (23) gebildeten Winkels ($\beta$) unterhalb des zweiten gegebenen Winkelwerts liegt.

**Claims**

1. A towfish intended to be submerged and towed by a cable (14), the towfish (12) comprising a frame (23) configured to move through water in a main horizontal direction (25) and at least one appendage (27) configured to generate a downwardly directed hydrodynamic lift (P) for the towfish (12) when the towfish (12) moves through water under the effect of towing, with the appendage (27) being orientable so as to modify its lift, the towfish (12) comprising a crosshead (21) free to rotate relative to the frame (23) about a horizontal axis (30) perpendicular to the main horizontal direction (25), with the cable (14) being intended to be attached to the crosshead (21), the towfish (12) comprising a non-motorised mechanism configured so that an orientation ($\gamma$) of the appendage (27), allowing it to modify the lift (P), is dependent on an angle ($\beta$) formed between the crosshead (21) and the frame (23) that is defined based on the main horizontal direction (25), with a law connecting the angle ($\beta$) to the orientation ($\gamma$) of the appendage (27) being configured so that when the value of the angle ($\beta$) decreases, the orientation ($\gamma$) of the appendage (27) is increased so as to reduce the hydrodynamic lift (P) on the towfish (12) and, above a first given value of the angle ($\beta$), the orientation ($\gamma$) of the appendage (27) is fixed so as to generate lift, called operational lift, on the towfish (12) and, below the first given value of the angle ($\beta$), the orientation ($\gamma$) of the appendage (27) is increased when the value of the angle ($\beta$) decreases so as to reduce the lift relative to the operational lift.

2. The towfish according to claim 1, **characterised in that**, over a range of values of the angle ($\beta$), the law is unstable so that a given value of the orientation ($\gamma$) of the appendage (27) results in a reduction of the angle ($\beta$).

3. The towfish according to any of the preceding claims, **characterised in that**, below a second given value of the angle ($\beta$) below the first given value of the angle, the orientation ($\gamma$) of the appendage (27) is fixed so as to generate lift, called trailing lift, below the operational lift.

4. The towfish according to claim 3, **characterised in that**, below the second given value of the angle ($\beta$), the orientation of the appendage (27) is positive or zero.

5. The towfish according to any of claims 3 or 4, **characterised in that** a third intermediate value of the angle ($\beta$) is defined between the first and the second value of the angle, and **in that**, between the first and the third value of the angle, a law connecting the angle ($\beta$) to the orientation ($\gamma$) of the appendage (27) is configured to maintain the angle ($\beta$) at a stable value.

6. The towfish according to claims 2 and 5, **characterised in that** the range of values of the angle ($\beta$) where the law is unstable is defined between the third and the second value of the angle, and **in that** the law is configured so as to orient the appendage (27) in order to achieve the trailing lift.

7. The towfish according to any of the preceding claims, **characterised in that** it comprises an airfoil (27) forming the appendage, and a stabilising empennage (29) configured to maintain a substantially constant attitude for the towfish (12) during modifications to the orientation ($\gamma$) of the appendage (27).

8. The towfish according to any of the preceding claims, **characterised in that** the appendage (27) is free to rotate relative to the frame (23) about a second horizontal axis (33), with the mobility of the appendage (27) allowing the lift (P) of the towfish (12) to be modified, and **in that** the second horizontal axis (33) of rotation of the appendage (27) is substantially disposed at the instantaneous centre of rotation of the towfish (12) when said towfish pivots due to a modification of the orientation ($\gamma$) of the appendage (27).

9. The towfish according to any of the preceding claims, **characterised in that** it comprises a cam (60) and a cam follower (61), one of which is rigidly connected to the appendage (27) and the other one of which is rigidly connected to the crosshead (21), and **in that** the cam follower (61) presses against a shape on the cam (60) as the crosshead (21) rotates about the horizontal axis (30).

10. The towfish according to claim 8, **characterised in that** it comprises a first lock (65) configured to maintain the appendage (27) in a fixed orientation ($\gamma$) when the value of the angle ($\beta$) is above the first given value of the angle.

11. The towfish according to any of claims 9 or 10 as claims dependent on claim 3, **characterised in that** it comprises a second lock (71, 72) configured to immobilise the crosshead (21) relative to the frame (23) when the value of the angle ($\beta$) formed between the crosshead (21) and the frame (23) is below the second given value of the angle.

FIG.1

**FIG.2**

**FIG.3**

FIG.4

FIG.5

β — 50

51 — μP — MEM

52

M

53

27

FIG.6

## FIG.7a

## FIG.7b

## FIG.7c

FIG.8a

FIG.8b

FIG.8c

FIG.8d

FIG.8e

FIG.8f

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2309952 A
- GB 2244249 A
- US 2008196651 A1
- US 3613626 A
- WO 2016135326 A